(19) Europäisches Patentamt
European Patent Office
Office européen des brevets

(11) **EP 2 112 496 A2**

(12) **EUROPÄISCHE PATENTANMELDUNG**

(43) Veröffentlichungstag:
**28.10.2009 Patentblatt 2009/44**

(21) Anmeldenummer: **09004738.2**

(22) Anmeldetag: **31.03.2009**

(51) Int Cl.:
***G01N 19/04*** *(2006.01)*

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **23.04.2008 DE 102008020392**

(71) Anmelder: **Fraunhofer-Gesellschaft zur Förderung der angewandten Forschung e.V. 80686 München (DE)**

(72) Erfinder:
• **Eichler, Marko**
**38106 Braunschweig (DE)**
• **Meyer, Moritz**
**D-49419 Wagenfeld (DE)**

(74) Vertreter: **Pfenning, Meinig & Partner GbR
Patent- und Rechtsanwälte
Theresienhöhe 13
80339 München (DE)**

(54) **Verfahren zur wiederholten Bestimmung der Bondfestigkeit aneinandergebondeter Substrate**

(57) Die Erfindung betrifft ein Verfahren zum Bestimmen der Bondfestigkeit an zumindest einem Bondinterface zwischen zumindest zwei Substraten. Die Erfindung betrifft außerdem eine Vorrichtung zur Durchführung des Verfahrens, ein Verfahren zur Herstellung eines gebondeten Objektes mit einstellbarer Bondfestigkeit sowie ein mit diesem Verfahren hergestelltes Objekt.

**EP 2 112 496 A2**

**Beschreibung**

Die Erfindung betrifft ein Verfahren zum Bestimmen der Bondfestigkeit an zumindest einem Bondinterface zwischen zumindest zwei Substraten. Die Erfindung betrifft außerdem eine Vorrichtung zur Durchführung des Verfahrens, ein Verfahren zur Herstellung eines gebondeten Objektes mit einstellbarer Bondfestigkeit sowie ein mit diesem Verfahren hergestelltes Objekt.

Im Stand der Technik ist eine Vielzahl von Verfahren bekannt, mit denen die Bondfestigkeit in einem Interface bestimmt werden kann. Einige dieser Verfahren sind in "Semiconductor Waferbonding: Science and Technologie" von Q.-Y. Tong und U. Gösele, erschienen bei John Wiley & Sons, INC. 1999, beschrieben.

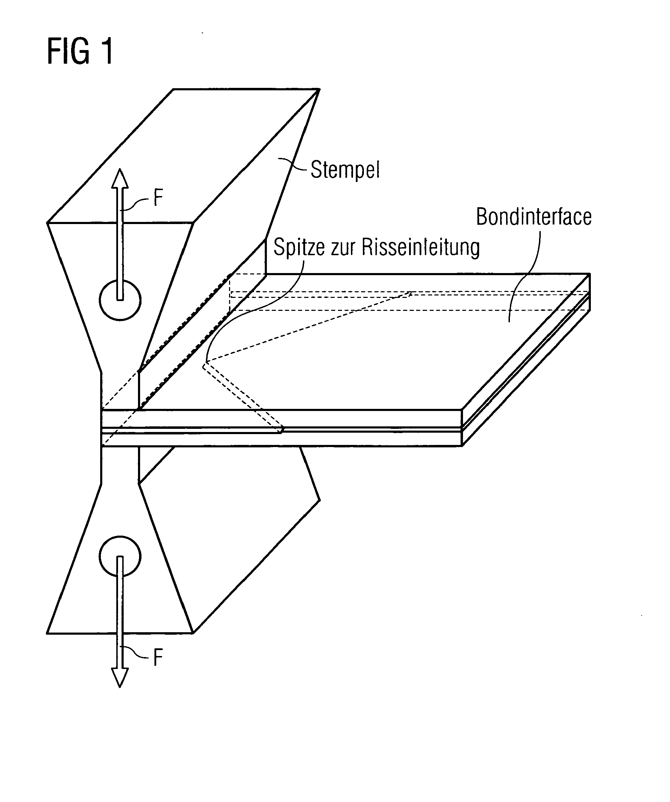

Die Bondfestigkeit kann auch durch die Bestimmung der Bruchzähigkeit charakterisiert werden. Die Bruchzähigkeit von Materialien kann z.B. mit dem Mikro-Chevron-Test ermittelt werden. Die dafür verwendete Geometrie ist in Figur 1 dargestellt. Die Auswertung kann mit der Methode der Finiten Elemente durchgeführt werden. Hierfür wird in einer Simulation das beim Test auftretende Risswachstum durch eine sukzessive Rissverlängerung modelliert. Aus dieser Simulation ergibt sich die Abhängigkeit des Spannungsintensitätsfaktors von der Risslänge. Mit den Ergebnissen der numerischen Simulation kann die Bruchzähigkeit aus der im Test gemessenen Maximalkraft bestimmt werden. Nachteilig ist hier, dass spezielle Strukturen benötigt werden und man von jeder einzelnen Struktur nur einen Messwert erhält. So müssen zum Beispiel bei Siliciumwafern die Strukturen aus den Wafern herausgesägt und anschließend einzeln vermessen Werden. Bei geringen Bondfestigkeiten trennen sich die gebondeten Substrate häufig schon beim Sägen und somit vor dem Vermessen.

Die Bondfestigkeit kann auch über die Bondenergie charakterisiert werden. Eine weit verbreitete Methode zur Bestimmung der Bondenergie ist der "crack opening test". Bei dieser Methode wird zwischen den Substraten in das Interface eine Schneide bzw. Klinge eingeführt, welche das Interface aufreißen lässt. Die Länge des Risses, d.h. die Risslänge L, ist abhängig von der Bondfestigkeit, der Dicke der Klinge y, der Dicke der Substrate t und dem Elastizitätsmodul E der Substrate. Wenn die Dicke der Substrate t und der Klinge y als auch das Elastizitätsmodul E der Substrate bekannt sind, kann mit der folgenden Formel die Bondenergie y bestimmt werden:

$$y = 3y^2 E_1 t_1^3 E_2 t_2^3 / (4L^4 (E_1 t_1^3 + E_2 t_2^3)) \hspace{2cm} 1)$$

Der Nachteil dieser Methode ist, dass die Messung jeweils an einer Stelle nur einmal nach dem Einführen der Klinge durchgeführt wird. Entsprechend werden relativ große Substrate benötigt, um mehrere Messungen durchführen zu können. Dies limitiert die Anzahl der möglichen Messungen. Daneben ist das Einführen der Schneide in das Interface häufig aufwändig und schwierig zu automatisieren.

Aufgabe der vorliegenden Erfindung ist es daher, ein Verfahren zur Bestimmung der Bondfestigkeit anzugeben, welches die oben genannten Nachteile überwindet und insbesondere auch an kleinen Substraten eine große Zahl von Messungen erlaubt und darüber hinaus leicht zu automatisieren ist. Aufgabe der vorliegenden Erfindung ist es außerdem, eine Vorrichtung anzugeben, die das erfindungsgemäße Verfahren durchführt. Aufgabe ist weiter, ein Verfahren zur Herstellung eines gebondeten Körpers anzugeben, bei welchem die Bondfestigkeit des Körpers genau eingestellt werden kann. Aufgabe ist außerdem, einen nach diesem Verfahren hergestellten Körper anzugeben.

Diese Aufgaben werden gelöst durch das Verfahren zum Bestimmen der Bondfestigkeit an zumindest einem Bondinterface zwischen zumindest zwei Substraten nach Anspruch 1, durch die Vorrichtung zum Bestimmen der Bondfestigkeit nach Anspruch 25, durch das Verfahren zur Herstellung eines gebondeten Körpers nach Anspruch 27 und durch das gebondete Objekt nach Anspruch 28.

Das erfindungsgemäße Verfahren ermöglicht die Bestimmung der Bondfestigkeit an zumindest einem Bondinterface zwischen zumindest zwei Substraten. Unter der Bondfestigkeit wird hierbei die Aneinanderhaftung bzw. die Aneinanderhaftungskraft der beiden Substrate an ihren einander berührenden Flächen bezeichnet.

Die Bondfestigkeit ist also der Widerstand mindestens zweier verbundener Substrate gegen die Ausbreitung von Rissen im Interface.

Das Bondinterface ist jener Bereich, in welchem sich die einander berührenden Oberflächen der beiden Substrate berühren. Am Bondinterface haften die Substrate also aneinander. Das Bondinterface ist vorzugsweise eben, die einander berührenden Oberflächen der beiden Substrate sind also vorzugsweise eben. Bevorzugt ist, dass die Substrate selbst flächig ausgebildet sind, also beispielsweise die Form von Platten, vorzugsweise von ebenen Platten, haben.

Gerade in der Mikrosystemtechnik sind die Oberflächen meist strukturiert, so dass sich beim Bonden zweier Substrate Hohlräume, Kanäle und dergleichen ergeben können.

Im erfindungsgemäßen Verfahren wird nun zunächst in einem Schritt 1) eine Schneide am Bondinterface so zwischen die beiden Substrate bewegt, dass sich eine Rissfront zwischen den Substraten im Bondinterface bildet. Die Schneide wird also vorzugsweise an einer Kante des Bondinterfaces aufgesetzt und dann mit einer Kraft zwischen die beiden sich am Bondinterface berührenden Substrate geschoben, so dass die Verbindung zwischen den Substraten zumindest bereichsweise gelöst wird. Hierbei bildet sich zwischen den beiden Substraten eine Rissfront. Die Rissfront ist hierbei jene Linie, welche den Bereich des Bondinterfaces, in welchem die Substrate einander berühren, von jenem Bereich trennt, in welchem die Substrate sich nicht berühren. Die Rissfront begrenzt also den Bereich in dem sich die Substrate berühren in Richtung der eingeschobenen Schneide. Für den Fall das die Substrate durch zumindest eine Zwischenschicht, beispielsweise aus Klebstoff, verbunden sind und sich daher nicht direkt berühren, gilt für die Definition der Rissfront Entsprechendes. Das heißt, dass in diesem Fall die Rissfront jenen Bereich, in welchem die Substrate über die zumindest eine Zwischenschicht aneinandergrenzen, von jenem Bereich trennt, in welchem die Substrate durch einen Freiraum beabstandet sind. Die Rissfront kann hier mit jener der Schneide zugewandten Seitenfläche der zumindest einen Zwischenschicht zusammenfallen.

Unter dem Bewegen der Schneide wird vorzugsweise das Schieben der Schneide zwischen die Substrate am bzw. entlang des Bondinterfaces, vorzugsweise in Richtung der Rissfront, bezeichnet.

Bei der beschriebenen Vorgehensweise können die Substrate vor dem Bewegen der Schneide zwischen die Substrate an jeweils einer Fläche vollständig aneinander grenzen, so dass die Flächen bis zu zumindest einer sie begrenzenden Kante zumindest eines der Substrate einander berühren. Es ist aber auch möglich, dass die Substrate nicht vollständig an den einander zugewandten Oberflächen der Substrate verbunden sind, sondern nur auf einem Teil dieser Flächen. Insbesondere ist es möglich, die Schneide bereits beim Aneinanderbonden der Substrate zwischen den Substraten zu platzieren. Dies ist insbesondere für das erfindungsgemäße Verfahren zur Herstellung eines gebondeten Objektes vorteilhaft.

Es kann nun bereits nach diesem Schritt 1) in einem Schritt 2) die Risslänge bestimmt werden, die durch das Einschieben der Schneide entsteht.

Unter der Risslänge wird hier wie auch im Folgenden der Abstand zwischen der Rissfront und der Schneide bezeichnet. Genauer ist die Risslänge der kürzeste Abstand zwischen der Rissfront und der Schnittlinie jener Fläche, welche die Berührungslinien der Schneide mit dem ersten und dem zweiten Substrat verbindet, mit der Ebene des Bondinterfaces.

In einem Schritt 3), welcher nach Schritt 2) durchgeführt werden kann, wird nun die Schneide am Bondinterface so zwischen die Substrate bewegt, dass sich die Rissfront in Richtung von der Schneide weg verlagert. Die Schneide wird also gegenüber ihrer in Schritt 1) erreichten Position weiter zwischen die Substrate, also weiter in Richtung der Rissfront bewegt, geschoben bzw. gedrückt. Hierdurch reißt das Bondinterface weiter auf und die Rissfront verlagert sich in Richtung von der Schneide weg.

Nach diesem Schritt 3), in welchem die Schneide weiter bewegt wird, kann dann in Schritt 4) die Risslänge bestimmt werden.

Grundsätzlich ist es so, dass sich die Rissfront, wenn die Schneide bewegt wird, nicht synchron mit der Schneide bewegt, sondern sich zur Bewegung der Schneide zeitverzögert verlagert. Wird also die Schneide von einer Position in eine andere Position bewegt, so hat die Rissfront zu dem Zeitpunkt, zu welchem die Schneide die andere Position erreicht, noch nicht ihren endgültigen Abstand von der Schneide erreicht, sondern bewegt sich noch eine gewisse Zeit nach diesem Zeitpunkt von der Schneide weg. Nach dem Erreichen der anderen Position durch die Schneide verlängert sich also die Risslänge noch für eine gewisse Zeit. Die Vergrößerung der Risslänge wird hierbei mit der Zeit kleiner. Dadurch erreicht die Rissfront nach einer bestimmten Zeit eine Position, von welcher aus die Weiterbewegung unterhalb der Messgenauigkeit liegt. Um ein möglichst zuverlässiges Maß für die Risslänge zu erhalten, ist es bevorzugt, wenn, nachdem die Schneide ihre Endposition in Schritt 1) und/oder 3) erreicht hat, noch eine Zeit P1 gewartet wird, bevor die Risslänge in Schritt 2) oder in Schritt 4) bestimmt wird. Die Zeit P1 beträgt vorzugsweise mehr als 15 Sekunden, bevorzugt mehr als 30 Sekunden. Sie kann auch mehr als 2 Minuten oder mehr als 5 Minuten betragen. Für besondere Fälle kann bis zu 15 Minuten oder länger gewartet werden. In geeigneten Fällen sind auch Zeiten $P1 \leq 15$ Sekunden möglich.

Ein besonderer Vorteil der vorliegenden Erfindung besteht darin, dass sie es erlaubt, eine Vielzahl von Messwerten für die Bondfestigkeit aufzunehmen, selbst wenn das Substrat klein ist. Besonders vorteilhaft können hierdurch Messreihen aufgenommen werden, welche die Abhängigkeit der Bondfestigkeit von einem oder mehreren Parametern darstellen. Die Parameter sind hierbei vorzugsweise solche, welche Einfluss auf die Bondfestigkeit haben. Solche Parameter können beispielsweise die Temperatur beim Tempern, die Dauer von Temperaturbehandlungen, wie beispielsweise Tempern, mechanische Belastungen, Temperaturwechsel, Diffusion von Stoffen in das Interface hinein oder aus dem Interface heraus, Druck, elektrische Stromstärke oder elektrische Spannung sein. Die oder der Parameter können hierbei in einem Schritt A von außen verändert werden, sich selbstständig verändern oder ortsabhängig in Bezug auf die Fläche des Bondinterfaces sein. Im letzteren Fall sind die beiden Substrate bezüglich des entsprechenden.Parameters nicht homogen miteinander gebondet, vielmehr verändert sich der entsprechende Parameter mit der Position auf dem Bondinterface, so dass die Schneide beim sukzessiven Einschieben zwischen die Substrate auf Regionen trifft, in welchen der oder die Parameter unterschiedliche Werte haben. Wird der entsprechende Parameter von außen verändert, so ist es bevorzugt, wenn die Veränderung jeweils vor dem Schritt 3) durchgeführt wird. Das Verfahren kann hierbei ab Schritt 3) bis zu Schritt 4) mehrmals durchgeführt werden, insbesondere einmal für jeden gewünschten Wert des Parameters oder aber auch mehrmals für jeden gewünschten Wert des Parameters, wenn eine bessere Statistik erhalten werden soll.

Darüber hinaus ist es auch möglich, das Verfahren, ohne einen die Bondfestigkeit beeinflussenden Parameter zu verändern, von Schritt 3) bis Schritt 4) mehrmals durchzuführen. In diesem Falle erhält man eine Vielzahl von Messwerten bei gleichen Parametern bzw. Bedingungen, so dass die Bondfestigkeit mit hoher Genauigkeit bestimmt werden kann.

Für bestimmte Parameter kann es eine gewisse Zeit dauern, bis der Parameter am Bondinterface den gewünschten Wert angenommen hat. Insbesondere in diesem Fall ist es vorteilhaft, wenn zwischen dem Bestimmen der Risslänge im Schritt 2) oder im Schritt 4) und dem darauf folgenden Schritt des Bewegens der Schneide eine gewisse Zeit P2 gewartet wird. In dieser Zeit können der oder die Parameter ihren Endwert annehmen. Möglich ist auch, die Schneide bereits während des sich Einstellen des Parameters zu bewegen, so dass in diesem Falle die Zeit P2 zwischen dem Zeitpunkt eines Messens der Bondfestigkeit und dem darauf folgenden Messen der Bondfestigkeit verstreicht. Die Zeit P2 kann insbesondere abhängig davon sein, welcher Parameter verändert wird und gegebenenfalls auch von der Geometrie der Substrate. Wird die Zeit P2 zwischen zwei aufeinander folgenden Messungen der Bondfestigkeit definiert, so kann die Zeit P2 die Zeit P1 umfassen. Die Zeit P2 kann abhängig vom gewählten zu verändernden Parameter eingestellt werden.

In einer Ausführungsform kann das Verfahren kontinuierlich durchgeführt werden. In diesem Fall wird die Schneide kontinuierlich bewegt und gleichzeitig die Risslänge gemessen. Die Schritte des Verfahrens werden hierbei vorzugsweise gleichzeitig ausgeführt. Gegebenenfalls kann für die gemessene Risslänge eine Korrektur berechnet werden, welche der Tatsache Rechnung trägt, dass die Bewegung der Rissfront gegenüber dem Bewegen der Schneide zeitverzögert erfolgen kann. Das Verfahren kann aber auch hinreichend langsam durchgeführt werden, so dass die Rissfront zu jedem Zeitpunkt im Wesentlichen Ihre Endposition erreichen kann.

Das Verfahren kann auch quasi kontinuierlich ausgeführt werden. In diesem Falle werden die Zeiten P1 und/oder P2 so kurz gewählt, dass in vielen eng beieinander liegenden Positionen der Schneide Messwerte vorliegen, wobei aber nach jedem Bewegen der Schneide die Rissfront Zeit hat, im Wesentlichen ihre Endposition zu erreichen.

Es ist darüber hinaus auch möglich, die Schneide schrittweise zu bewegen und ab dem Erreichen einer Position durch die Schneide zeitabhängig die Bewegung der Rissfront zu messen. Aus dieser Bewegung der Rissfront kann ebenfalls auf die Bondfestigkeit geschlossen werden.

Es ist möglich, dass die Schneide jeweils nach einem Durchführen oder nach einer gewissen Zahl von Durchführungen des erfindungsgemäßen Verfahrens aus dem Interfacebereich entfernt wird. Bevorzugt ist es jedoch, wenn die Schneide während des gesamten Verfahrens zwischen den Substraten verbleibt. Bevorzugt wird dabei die Schneide nur in Richtung der Rissfront vorwärts bewegt, jedoch nicht zurück von der Rissfront weg.

Bevorzugt ist, dass die Bondfestigkeit aus der in Schritt 2) und/oder Schritt 4) gemessenen Risslänge bestimmt wird. Die Bestimmung der Bondfestigkeit aus der Risslänge kann hierbei mittels oben genannter Gleichung 1) erfolgen.

Die Risslänge ist grundsätzlich mit jedem Verfahren bestimmbar, welches die Detektion einer Rissfront ermöglicht. Insbesondere kann die Risslänge mittels Durchleuchtung der Substrate mit Strahlung erfolgen, für welche zumindest eines der Substrate transparent ist. Ist beispielsweise zumindest eines der Substrate für sichtbares Licht transparent, so kann die Risslänge optisch mit Durchstrahlung von sichtbarem Licht erfolgen. Darüber hinaus ist eine Bestimmung der Risslänge auch mit Ultraschall oder Röntgenstrahlung möglich.

Es ist im erfindungsgemäßen Verfahren außerdem möglich, zur Bestimmung der Bondfestigkeit die Risslänge indirekt aus mechanischen Spannungen in den das Interface bildenden Substraten zu bestimmen. Darüber hinaus kann zur Bestimmung der Risslänge auch ein elektrischer Widerstand zwischen den das Interface bildenden Substraten bestimmt werden. Auch die Verformung der Substrate kann zur Bestimmung der Risslänge herangezogen werden.

Mechanische Spannungen in den das Interface bildenden Substraten können zur indirekten Bestimmung der Risslänge herangezogen werden, da diese durch das Elastizitätsmodul E der Materialien der Substrate beeinflusst werden. Das Elastizitätsmodul beschreibt ja das elastische Verfahren beim Auftreten von Kräften oder Spannungen. Man kann daher die Risslänge aus dem Spannungsverlauf in den gebondeten Substraten bestimmen oder zumindest abschätzen. Bei Kunststoffen kann der Spannungsverlauf beispielsweise mittels Spannungsoptik bestimmt werden. Auch bei hinreichend dünnen Substraten kann man aus der Verformung die Risslänge bestimmen oder abschätzen und auch die Spannung im Material bestimmen.

Die Bestimmung der Risslänge aufgrund des elektrischen Widerstandes zwischen den Substraten beruht auf der folgenden Idee. Wenn sich die Rissfront zwischen den Substraten ausdehnt, wird die gebondete Fläche zwischen den Substraten kleiner und der elektrische Widerstand zwischen den Substraten steigt. Der Verlauf der Rissfront kann daher aus dem gemessenen Widerstand bestimmt werden. Für den Fall, dass sich zwischen den leitfähigen Substraten eine dielektrische Schicht befindet, kann auch die Kapazität über diese dielektrische gemessen werden. Diese ändert sich bei Verlagerung der Rissfront ebenfalls. Ähnlich kann man, wenn die Substrate dielektrisch sind, auf den nicht gebondeten Oberflächen der Substrate Elektroden aufbringen und die Kapazität des gesamten Verbundes bestimmen. Auch hieraus lässt sich der Verlauf der Rissfront bestimmen. Sowohl bei der Verwendung von Widerstandsänderungen als auch von Kapazitätsänderungen, wie oben beschrieben, muss der Einfluss der Klinge auf die Messungen berücksichtigt werden.

Als Schneide können im erfindungsgemäßen Verfahren alle Werkzeuge zum Einsatz kommen, die ein Trennen aneinander gebondeter Substrate ermöglichen. Besonders vorteilhaft ist die Schneide eine Klinge, ein Draht, ein Metallband, eine Metallplatte oder auch eine Rasierklinge. Die Schneide kann Stahl, Keramik, Teflon, Wolfram und/oder ähnliche Materialien aufweisen oder daraus bestehen. Wird die Bondfestigkeit temperaturabhängig bestimmt, so ist es außerdem vorteilhaft, wenn die Schneide aus einem Material besteht, welches im entsprechenden Temperaturbereich temperaturbeständig ist. Insbesondere kann auch die Schneide mit Teflon beschichtet sein.

Das erfindungsgemäße Verfahren kann grundsätzlich bei allen Arten von Bondings zwischen allen geeigneten Materialien zum Einsatz kommen. Als Substrate kommen beispielsweise Silicium-Wafer, Halbleiter oder Gläser in Frage.

Das Verfahren kann gleichzeitig oder nacheinander an verschiedenen Bondfronten ausgeführt werden. Hierdurch kann u.a. eine Beschädigung des gebondeten Objektes begrenzt werden. Bevorzugt ist es auch, wenn die Schneide nur so weit in das Interface eingeführt wird, dass sich der Riss nur infinitisimal oder um einen kleinen Betrag weitet. Unter einer infinitisimalen Weitung werden hier Beträge von weniger als 1 mm, vorzugsweise weniger 0,1 mm, besonders bevorzugt um weniger als 0,01 mm verstanden. In diesem Fall ist es nicht notwendig, dass man die Wanderung der Rissfront sehen kann, es reicht vielmehr aus, dass Schwingungen detektierbar sind, welche auf eine Rissausbreitung, also eine Wanderung der Rissfront, hin deuten. Hierdurch braucht man die Schneide nur so weit zwischen die Substrate zu schieben, bis die Schwingungen durch die Wanderung der Rissfront detektierbar sind. Eine messbare Änderung der Risslänge kann sich dann nur dadurch ergeben, dass die Klinge weiter eingeschoben ist, ohne dass die Rissfront merklich gewandert ist.

Im Folgenden soll das erfindungsgemäße Verfahren anhand einiger Figuren beispielhaft erläutert werden.

Figur 1 zeigt das Prinzip eines Mikro-Chevron-Tests nach dem Stand der Technik. Das Verfahren wird in www.dvs-ev.de/fv/neu/vorhaben/vorhabeninfo/104/ SB 13.554B.pdf beschrieben.

Figur 2 zeigt das Einschieben einer Klinge gemäß dem erfindungsgemäßen Verfahren.

Figur 3 zeigt den Aufbau einer Vorrichtung zur Durchführung des erfindungsgemäßen Verfahrens.

Figur 4 zeigt den Verlauf einer Bondenergie in Abhängigkeit von Temperatur und Zeit.

Figur 5 zeigt das Elastizitätsmodul für Silizium in Abhängigkeit von der Temperatur.

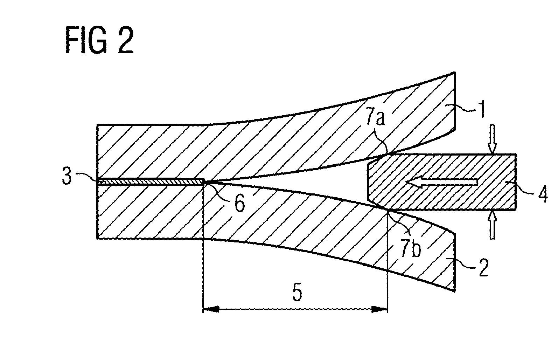

Figur 2 zeigt das Einschieben einer Schneide 4 zwischen ein Substrat 1 und ein Substrat 2, die an einem Bondinterface 3 miteinander gebondet sind. Die Schneide 4 wird hierbei in Richtung des Bondinterfaces 3 zwischen die Substrate 1 und 2 geschoben. Hierbei reißt das Bondinterface 3 auf, und es bildet sich eine Rissfront 6 aus, welche den Bereich des Bondinterfaces 3 von jenem Bereich trennt, in welchem die Substrate 1 und 2 nicht miteinander verbunden sind. Der Abstand der Rissfront 6 von der Schneide 4, insbesondere von jener Fläche, welche die Berührungslinien 7a, 7b der Schneide mit dem Substrat verbindet, wird Risslänge 5 genannt. Wird die Schneide 4 bis zu einem bestimmten Punkt zwischen die Substrate 1 und 2 eingeschoben, so bewegt sich die Rissfront 6 anschließend noch eine Zeit lang von der Schneide 4 weg, so dass sich die Risslänge 5 weiter vergrößert.

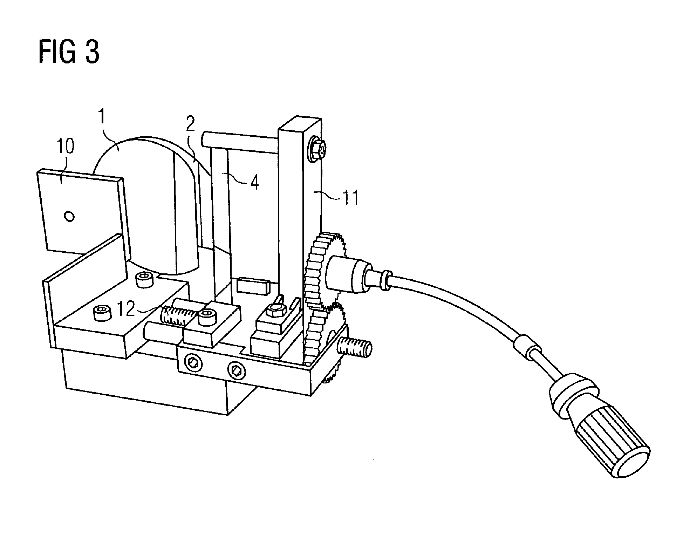

Figur 3 zeigt einen Aufbau, in welchem das erfindungsgemäße Verfahren durchführbar ist. Insbesondere ist mit diesem Aufbau das wiederholte Messen der Bondenergie und damit der Bondfestigkeit möglich. Hierbei wird eine Schneide 4 mittels einer Vorschubvorrichtung 11 zwischen zwei Substrate 1 und 2 gedrückt, die aneinander gebondet sind. Zur besseren Übersichtlichkeit wurde ein Teil des Substrates 1 entfernt, so dass das Substrat 2 hinter Substrat 1 zu erkennen ist. Die aneinander gebondeten Substrate 1 und 2 sind in der Halterung 10 eingespannt, welche der Schneide 4 so gegenüber angeordnet ist, dass sich die Schneide 4 direkt auf die Halterung 10 zu bewegt. Die Vorschubbewegung der Schneide 4 wird durch die Vorschubvorrichtung 11 geleistet, welche über eine Schraube 12 bewegt wird. Die Vorschubvorrichtung 11 wird von außen durch eine Antriebseinheit 13 bewegt.

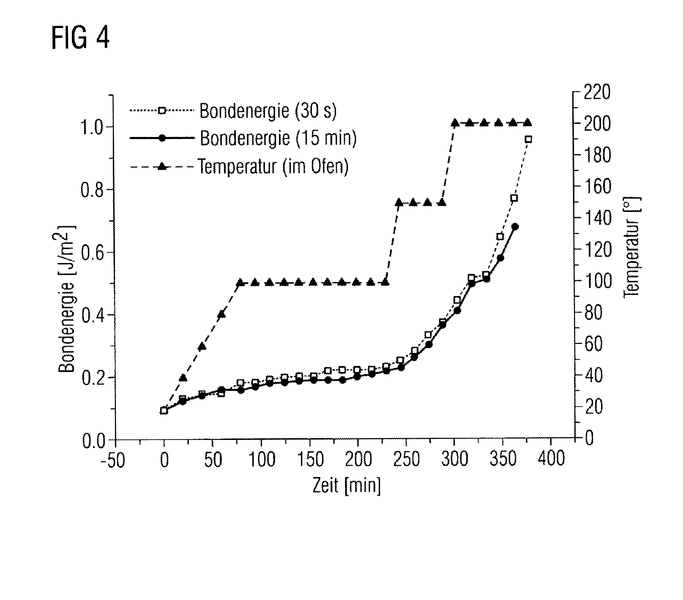

Figur 4 zeigt den Verlauf einer Bondenergie in Abhängigkeit von der Temperatur und der Zeit. Hierbei wurden vor dem Bonden Silizium-Standardwafer 1, 2 mit Orientierung 100 und einer Dicke von 500 μm mit Wasser und Megaschall von Partikeln gereinigt und mit einem Spin-Dryer getrocknet. Anschließend wurden die Wafer gebondet (direct bonding). Die gebondeten Wafer wurden in einer Messvorrichtung, wie sie in Figur 3 gezeigt ist, eingebaut und mit der Messvorrichtung in einem Ofen platziert. Die Bestimmung der oben definierten Risslänge erfolgte mit Infrarotlichtdurchstrahlung und Aufnahme der Bilder mittels einer geeigneten Infrarotkamera. Die Klinge 4 wurde bei jeder Messung weiter in den Waferverbund hineingeschoben, bis die Bondfront 6, d.h. die Rissfront 6, zu wandern begann. Anschließend wurde nach 30 Sekunden und nach etwa 15 Minuten ein Bild von der Bondfront 6 bzw. Rissfront 6 sowie von der Klinge 4 aufgenommen und aus den Bildern die Bondenergie bestimmt. In Figur 4 sind jeweils beide Bondenergien dargestellt. Darüber hinaus ist der Temperaturverlauf im Ofen dargestellt.

In Figur 4 bezeichnen die Dreiecke die auf der rechten vertikalen Achse aufgetragene Temperatur in Grad Celsius in Abhängigkeit von der auf der horizontalen Achse aufgetragenen Zeit in Minuten. Die Kreise zeigen die auf der linken vertikalen Achse in J/m$^2$ aufgetragene Bondenergie an, wie sie 15 Minuten nach dem Ende des Einschiebens der Schneide zur jeweils nächsten Position gemessen wurde. Die Quadrate zeigen die Bondenergie an, welche 30 Sekunden nach dem Einschieben der Schneide zur jeweils nächsten Position gemessen wurde. Die auf der horizontalen Achse aufgetragene Zeit ist jene Zeit, zu welcher die Klinge in das Interface hineinbewegt wurde.

Eine temperaturabhängige Messung der Bondfestigkeit ist mit dem erfindungsgemäßen Verfahren besonders einfach möglich. Die Temperatur im Ofen ist hierbei dann der Parameter, von welchem die Bondfestigkeit abhängt. Zu erkennen ist, dass die Bondenergie mit der Temperatur steigt. In Figur 4 wurden im Ofen zunächst 20 °C als Temperatur eingestellt, nach einer Zeit von 60 Minuten wurde dann auf 100 °C erhöht und für 200 Minuten gehalten, nach einer Zeit von 250 Minuten ab 0 wurde die Temperatur dann auf 150 °C erhöht und für ca. 50 Minuten gehalten. Anschließend wurde die Temperatur auf 200 °C erhöht. Zu erkennen ist auch, dass die Bondenergie, die nach 30 Sekunden bestimmt wurde, mit der nach 15 Minuten bestimmten Bondenergie für niedrige Temperaturen fast identisch ist. Im gezeigten Beispiel ist also eine Wartezeit P1 von 30 Sekunden ausreichend, um die Bondenergie genau bestimmen zu können. Erst bei höheren Bondenergien ab 0,2 J/m$^2$ im gezeigten Beispiel, ergeben sich zwischen der Messung nach 30 Sekunden und jener nach 15 Minuten signifikante Unterschiede, so dass hier eine Wartezeit von 30 Sekunden nicht ausreichend ist.

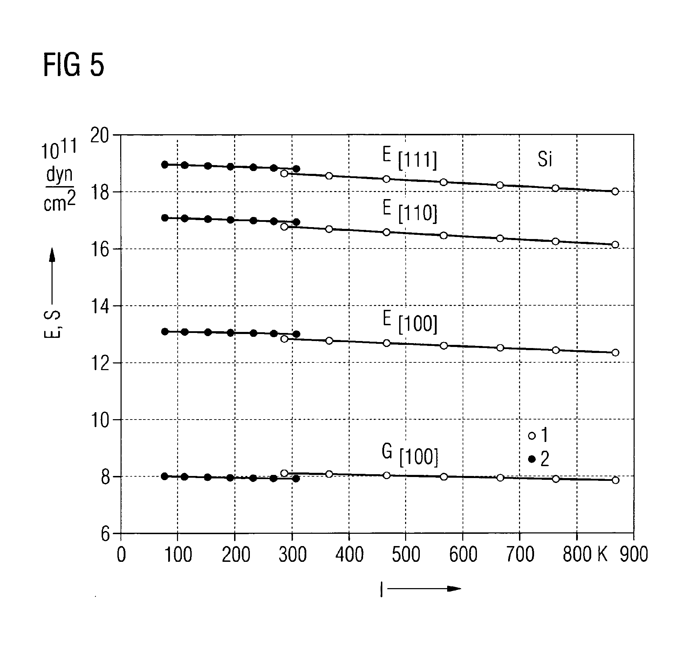

Wird der Temperaturverlauf der Bondenergie oder Bondfestigkeit bestimmt, so muss grundsätzlich auch die Temperaturabhängigkeit anderer Größen berücksichtigt werden, welche in die Bondenergie oder die Bondfestigkeit eingehen. Dies ist normalerweise insbesondere das Elastizitätsmodul der Materialien der verbundenen Substrate. Figur 5 zeigt das Elastizitätsmodul E für Silizium in dyn/cm$^2$ in Abhängigkeit von der Temperatur T in Kelvin. Das Elastizitätsmodul E ist hierbei für verschiedene Orientierungen des Siliziums gezeigt. Es ist zu erkennen, dass das Elastizitätsmodul E für steigende Temperaturen leicht fällt. Für Silizium ist jedoch dieser Abfall mit der Temperatur relativ gering, so dass die Temperaturabhängigkeit des Elastizitätsmoduls im vorliegenden Beispiel vernachlässigt werden konnte. Ist die Abhängigkeit einer Materialeigenschaft zumindest eines Substrates von einem oder mehreren der im erfindungsgemäßen Verfahren veränderten Parameter stärker ausgeprägt, so wird die Bondenergie und/oder die Bondfestigkeit vorzugsweise so korrigiert, dass der Einfluss der entsprechenden Parameter auf die Größe, beispielsweise das Elastizitätsmodul, eliminiert wird und nur der Einfluss des entsprechenden Parameters auf die Bondenergie bzw. die Bondfestigkeit bestimmt wird.

### Patentansprüche

1. Verfahren zum Bestimmen der Bondfestigkeit an zumindest einem Bondinterface zwischen zumindest zwei Substraten, umfassend die Schritte

   1) Bewegen einer Schneide am Bondinterface so zwischen die zwei Substrate, dass sich eine Rissfront zwischen den Substraten ausbildet,
   2) Bestimmen des Abstandes zwischen der Rissfront und der Schneide als erste Risslänge,
   3) Bewegen der Schneide entlang des Bondinterfaces so in Richtung der Rissfront zwischen die Substrate, dass sich die Rissfront in Richtung von der Schneide weg verlagert und
   4) Bestimmen des neuen Abstandes zwischen der Rissfront und der Schneide als weitere Risslänge.

2. Verfahren nach dem vorhergehenden Anspruch,
   **dadurch gekennzeichnet, dass** aus der in Schritt 2) und/oder Schritt 4) bestimmten Risslänge die Bondfestigkeit bestimmt wird.

3. Verfahren nach dem vorhergehenden Anspruch,
   **dadurch gekennzeichnet, dass** nach dem Bewegen der Schneide in Schritt 1) und/oder im Schritt 3) und vor dem darauf folgenden Bestimmen der Risslänge eine Zeit P1 verstreicht.

4. Verfahren nach einem der vorhergehenden Ansprüche,
   **dadurch gekennzeichnet, dass** in einem Schritt A, der nach Schritt 2) und vor Schritt 3) ausgeführt wird, zumindest ein Parameter, der die Bondfestigkeit beeinflusst, verändert wird und/oder sich verändert und/oder dass zumindest ein Parameter, der die Bondfestigkeit beeinflusst, an einem Ort, an dem die Schneide beim folgenden Bewegen der Schneide bewegt wird, einen anderen Wert hat als an einem Ort, an dem sich die Schneide nach dem vorangegangenen Bewegen der Schneide befand.

5. Verfahren nach einem der vorhergehenden Ansprüche,
   **dadurch gekennzeichnet, dass** das Verfahren von Schritt A und/oder von Schritt 3) bis zum Schritt 4) einmal oder mehrmals wiederholt wird.

**6.** Verfahren nach einem der Ansprüche 1 bis 4,
**dadurch gekennzeichnet, dass** das Verfahren von Schritt 3) bis Schritt 4) wiederholt wird, ohne dass ein Parameter, der die Bondfestigkeit beeinflusst, in einem dieser wiederholten Schritte unterschiedlich ist.

**7.** Verfahren nach einem der vorhergehenden Ansprüche,
**dadurch gekennzeichnet, dass** zwischen zumindest einer der Bestimmungen der Risslänge und dem darauf folgenden Bewegen der Schneide eine Zeit P2 verstreicht.

**8.** Verfahren nach einem der Ansprüche 3 bis 7,
**dadurch gekennzeichnet, dass** die Zeit P1 und/oder die Zeit P2 abhängig von zumindest einem der Parameter, welche die Bondfestigkeit beeinflussen, eingestellt wird.

**9.** Verfahren nach einem der vorhergehenden Ansprüche,
**dadurch gekennzeichnet, dass** das Verfahren kontinuierlich durchgeführt wird und/oder die Schritte 1), 2), 3), 4) und/oder A gleichzeitig durchgeführt werden.

**10.** Verfahren nach einem der vorhergehenden Ansprüche,
**dadurch gekennzeichnet, dass** die Zeit P1 und/oder P2 so kurz gewählt ist, dass die Bewegung der Schneide und/oder die Bestimmung der Risslänge quasi-kontinuierlich erfolgt, vorzugsweise, dass P1 und/oder P2 $\leq$ 10 Minuten, vorzugsweise $\leq$ 7 Minuten, vorzugsweise $\leq$ 5 Minuten, vorzugsweise $\leq$ 3 Minuten, vorzugsweise < 1 Minute, vorzugsweise < 30 Sekunden, vorzugsweise < 10 Sekunden, gewählt ist.

**11.** Verfahren nach einem der vorhergehenden Ansprüche,
**dadurch gekennzeichnet, dass** in Schritt 2) und/oder in Schritt 4) die Risslänge in mehreren Zeitabständen zum unmittelbar vorangegangenen Bewegen der Klinge gemessen wird und/oder dass die Risslänge zeitabhängig gemessen wird.

**12.** Verfahren nach einem der vorhergehenden Ansprüche,
**dadurch gekennzeichnet, dass** die Schneide nach Schritt 2) und/oder 4) und vor dem nächsten Bewegen der Schneide zwischen den Substraten verbleibt.

**13.** Verfahren nach einem der vorhergehenden Ansprüche,
**dadurch gekennzeichnet, dass** die Risslänge mittels Durchleuchtung mit infrarotem Licht bestimmt wird.

**14.** Verfahren nach einem der vorhergehenden Ansprüche,
**dadurch gekennzeichnet, dass** zumindest eines der Substrate transparent ist und/oder die Bestimmung der Risslänge optisch erfolgt.

**15.** Verfahren nach einem der vorhergehenden Ansprüche,
**dadurch gekennzeichnet, dass** die Risslänge mittels Ultraschall bestimmt wird.

**16.** Verfahren nach einem der vorhergehenden Ansprüche,
**dadurch gekennzeichnet, dass** die Rissfestigkeit indirekt aus mechanischen Spannungen in zumindest einem der Substrate, aus zumindest einer Messung des elektrischen Widerstandes zwischen den Substraten und/oder aus zumindest einer Verformung zumindest eines der Substrate erfolgt.

**17.** Verfahren nach einem der vorhergehenden Ansprüche,
**dadurch gekennzeichnet, dass** die Schneide ein Draht, ein Metallband, eine Metallplatte und/oder eine Rasierklinge ist.

**18.** Verfahren nach einem der vorhergehenden Ansprüche,
**dadurch gekennzeichnet, dass** die Schneide gegenüber Temperaturen $\geq$ 200 °C, vorzugsweise $\geq$ 300 °C, vorzugsweise $\geq$ 500 °C, vorzugsweise $\geq$ 800 °C beständig ist.

**19.** Verfahren nach einem der vorhergehenden Ansprüche,
**dadurch gekennzeichnet, dass** die Schneide Keramik, Teflon und/oder Stahl aufweist oder daraus besteht.

**20.** Verfahren nach einem der vorhergehenden Ansprüche,

**dadurch gekennzeichnet, dass** zumindest eines der Substrate ein Silicium-Wafer ist und/oder einen Halbleiter und/oder Glas aufweist oder daraus besteht.

21. Verfahren nach einem der Ansprüche 4 bis 20,
**dadurch gekennzeichnet, dass** der zumindest eine Parameter, der die Bondfestigkeit beeinflusst, eine Temperatur, eine Temperatur beim Tempern, eine Temperzeit, eine lokal unterschiedliche Eigenschaft zumindest einer der Substratoberflächen am Bondinterface, eine Dauer einer Temperaturbehandlung zumindest eines der Substrate, eine mechanische Belastung zumindest eines der Substrate, ein Temperaturwechsel, eine Diffusion von Stoffen in das Bondinterface hinein oder aus dem Bondinterface hinaus, ein Druck, eine elektrische Stromstärke und/oder eine elektrische Spannung ist.

22. Verfahren nach einem der vorhergehenden Ansprüche,
**dadurch gekennzeichnet, dass** in Schritt 1) die Schneide beim Verbinden und/oder Bonden der Substrate miteinander zwischen die Substrate eingebracht wird.

23. Verfahren nach einem der vorhergehenden Ansprüche,
**dadurch gekennzeichnet, dass** das Verfahren an zumindest zwei Bondinterfaces und/oder zumindest zwei Rissfronten durchgeführt wird.

24. Verfahren nach einem der vorhergehenden Ansprüche,
**dadurch gekennzeichnet, dass** in Schritt 1) oder 3) die Schneide so zwischen die Substrate eingeführt wird, dass sich die Rissfront nur infinitisimal verschiebt, vorzugsweise um weniger als 1 mm, vorzugsweise um weniger als 0,1 mm, vorzugsweise um weniger als 0,01 mm.

25. Vorrichtung zum Bestimmen der Bondfestigkeit an zumindest einem Bondinterface zwischen zumindest zwei Substraten, wobei die Vorrichtung aufweist: zumindest eine Schneide, zumindest eine Vorschubvorrichtung zum Bewegen der Schneide in zumindest zwei Positionen zwischen den Substraten sowie zumindest eine Bestimmungsvorrichtung zum Bestimmen zumindest einer Risslänge zwischen den Substraten.

26. Vorrichtung nach dem vorhergehenden Anspruch,
**dadurch gekennzeichnet, dass** mit der Vorrichtung ein Verfahren nach einem der Ansprüche 1 bis 24 durchführbar ist.

27. Verfahren zum Herstellen eines gebondeten Körpers,
**dadurch gekennzeichnet, dass** die Bondfestigkeit mit Hilfe eines Verfahrens nach einem der Ansprüche 1 bis 24 bestimmt wird und eine gewünschte Bondfestigkeit eingestellt wird.

28. Gebondetes Objekt mit zumindest zwei aneinander gebondeten Substraten,
**dadurch gekennzeichnet, dass** das Objekt in einem Verfahren nach dem vorhergehenden Anspruch hergestellt ist.

# FIG 1

Stempel

Spitze zur Risseinleitung

Bondinterface

F

F

FIG 2

FIG 3

## FIG 4

FIG 5

**EP 2 112 496 A2**

**IN DER BESCHREIBUNG AUFGEFÜHRTE DOKUMENTE**

**In der Beschreibung aufgeführte Nicht-Patentliteratur**

- **von Q.-Y. Tong ; U. Gösele.** Semiconductor Wafer-bonding: Science and Technologie. John Wiley & Sons, INC, 1999